# EUROPEAN PATENT APPLICATION

(11) **EP 3 091 768 A1**
(43) Date of publication of application: **09.11.2016**
(21) Application number: 15745861.3
(22) Date of filing: 23.01.2015
(51) Int. Cl.: H04W 12/06, G06F 21/44, H04M 1/00, H04M 11/00, H04W 88/04, H04L 29/08, G06F 21/35, H04L 9/32

(54) **COMMUNICATION SYSTEM**

(30) Priority: 06.02.2014 JP 2014021091
(71) Applicant: Aplix IP Holdings Corporation, Tokyo 169-0051 (JP)
(72) Inventor: SHIRAKAWA, Takahiro, Tokyo 160-0022 (JP); CHUN, Jangsoo, Tokyo 160-0022 (JP); ADACHI, Eiji, Tokyo 160-0022 (JP)
(74) Representative: Cohausz & Florack
(86) International application number: PCT/JP2015/051916
(87) International publication number: WO 2015/118971

(57) **Abstract**

Legitimacy of beacon device is determined based on certification by the server. Communication for this certification is relayed by a wireless handy terminal. Thereby, reliability of the communication system using the beacon device is improved and service such as distribution of an electronic coupon can be safely provided.

## Description

### Technical Field

The present invention relates to a communication system.
In particular, the present invention relates to a technology for preventing abuse of information output from a beacon device in a communication system including the beacon device.

### Background Art

Recently, beacon devices begin to spread in markets, for instance beacon devices are disposed in stores and amusement facilities. Here, beacon devices transmit beacon signals to wireless handy terminals such as smartphones belonged to consumers. In wireless handy terminals which receive beacon signals from beacon devices, product information is picked up from beacon signals by an application program installed in wireless handy terminals. Thereby, product information can be displayed on display units of wireless handy terminals.

As mentioned in the above, for example, it is well-known a technology disclosed in Patent Literature 1 shown below, as a technology where beacon devices transmit beacon signals and wireless handy terminals receive beacon signals.

In Patent Literature 1, it is disclosed a data communication system in which devices for seller side detect by beacon signals that devices for buyer side carried by buyers approach stores, devices for seller and devices for buyer start to communicate and product advertising is conducted to devices for buyer side.

### Citation List

### Patent Literature

PTL 1: Japanese Unexamined Patent Application Publication No. 2000-134147

### Summary of Invention

### Technical Problem

Up to now, as use of beacon devices, although it is almost limited to digital signage and so on, through which product advertising is displayed on wireless handy terminals, as shown in Patent Literature 1 in the above, it will be conceivable beacon devices which provides electronic coupons, thereby it can be realized that, for example, a discount privilege of products is given to customers in stores by utilizing functions of beacon devices.

However, in a case that the function of electronic coupon is given to beacon devices, it will be possible abuse of electronic coupon. For instance, in a case that the beacon device set in the store transmits beacon data through which points are saved for the customer coming to the store, communication data of electronic coupon are intercepted by approaching a cracking device similar to the wireless handy terminal toward the beacon device and such communication data are stored. Thereby, there is a fear that electronic coupon can be illegally issued in a place out of the store by using the device imitating the beacon device and can be saved.

As for the above cracking to abuse the information transmitted from the beacon device, several measures are conceivable. As one of them, although it is conceivable to apply certification using code, in this case there is a problem who certifies legitimacy of the beacon device. Here, the wireless handy terminals belonging to users of unspecified number of the general public are not appropriate for the device to certify legitimacy of the beacon device. On the other hand, a method such as using an internet server storing information used for certification of the beacon device, is conceivable. However, in most cases, the beacon device does not have function to directly access the internet. Therefore, there is no means to secure legitimacy of the beacon devices among the conventional communication technology between the beacon device and the wireless handy terminal.

The present invention addresses the foregoing problem, and has an object to provide a communication system allowing reliability of communication can be improved by judging legitimacy of the beacon device.

### Solution to Problem

In order to dissolve the above problem, a communication system according to the present invention includes a communication device, a communication terminal capable of communicating with the communication device and a server capable of communicating with the communication terminal.

The communication device includes: a device storing unit for storing terminal certification information to judge legitimacy of the communication terminal; a device producing unit for producing device request information; a device communication unit transmitting device request information to the communication terminal; and a device judgment unit for judging legitimacy of the communication terminal by comparing terminal response information transmitted from the communication terminal with device collation information produced by applying the terminal certification information to the device request information.

The communication terminal includes: a terminal server communication unit for transmitting the device request information transmitted from the communication device to the server; and a terminal device communication unit for transmitting the terminal response information transmitted from the server to the communication device.

The server includes: a server storing unit for storing the terminal certification information; and a server response unit for producing the terminal response information by applying the terminal certification information to the device request information transmitted from the communication terminal and transmitting the terminal response information to the communication terminal.

### Advantageous Effects of Invention

According to one aspect of the present invention, it can be provided a communication system through which mutual legitimacy between the wireless handy terminal and the beacon device can be judged, thereby reliability of communication can be improved.

The problems, constructions and effects other than the above mentioned will be cleared by explanation of the embodiments below.

### Brief Description of Drawings

[Fig. 1] Fig 1 is an outline view schematically indicating whole construction of a communication system according to a first embodiment.
[Fig. 2] Fig. 2 is a functional block diagram of the communication system.
[Fig. 3] Fig. 3 is an explanatory view showing one example of a beacon signal.
[Fig. 4] Fig. 4 is an explanatory view showing one example of a beacon certification information database.
[Fig. 5] Fig. 5 is a process flowchart showing a communication flow conducted among a beacon device, a wireless handy terminal and a server.
[Fig. 6] Fig. 6 is an outline view schematically indicating whole construction of a communication system according to a second embodiment.
[Fig. 7] Fig. 7 is a function block diagram of the wireless handy terminal.
[Fig. 8] Fig. 8 is a process flowchart showing a communication flow conducted among the beacon device, the wireless handy terminal and the server in the second embodiment.

### Description of Embodiments

In the embodiment, it will be disclosed a communication system including a beacon device corresponding to the BLE standard. Here, the BLE standard is an abbreviated designation of Bluetooth (Registered Trademark) Low Energy, and is used in the short distance radio communication technology. In the BLE standard, it is proposed a network topology of star model in which a plurality of peripherals is connected to one central. Frequency band specified in the BLE standard is 2.4 GHz band. Further, in the BLE standard, such frequency band is divided into 40 channels and it is specified to use a design called an adaptation frequency hopping to avoid channels producing interference and jamming.

The beacon device corresponds to each of the peripherals and the above wireless handy terminal corresponds to the central. The beacon device corresponding to the peripheral is specified by the BLE standard, more strictly the beacon device transmits advertising packet as a beacon signal which is specified by the BLE standard during advertising interval corresponding to a predetermined transmission time interval. When the wireless handy terminal corresponding to the central receives the advertising packet, the wireless handy terminal can establish connection to the beacon device through a predetermined procedure (protocol). Here, whether or not connection is established is dependent on behavior of the central. In a case that the central only receives contents such as advertising, it is enough that the central receives the advertising packet transmitted from the peripheral by broad cast transmission.

In the embodiment, since it is necessary that the wireless handy terminal and the beacon device communicate with each other, it is necessary to establish connection between the central and the peripheral.

In the communication system according to the embodiment, when the wireless handy terminal certifies the beacon device, the wireless handy terminal requests certification of the beacon device to the server having database storing ID of the beacon device and certification information to certify the beacon device. The server certifies legitimacy of the beacon device through, for example, CRAM (Challenge and Response Authentication Mechanism) by using the certification information. In contrast, the beacon device certifies the server by using the certification information. This certification information is a kind of common key. The server notifies the certification result to the wireless handy terminal, thereby the wireless handy terminal can judge whether the beacon device is legitimate or not.

### [FIRST EMBODIMENT: WHOLE CONSTRUCTION OF COMMUNICATION SYSTEM]

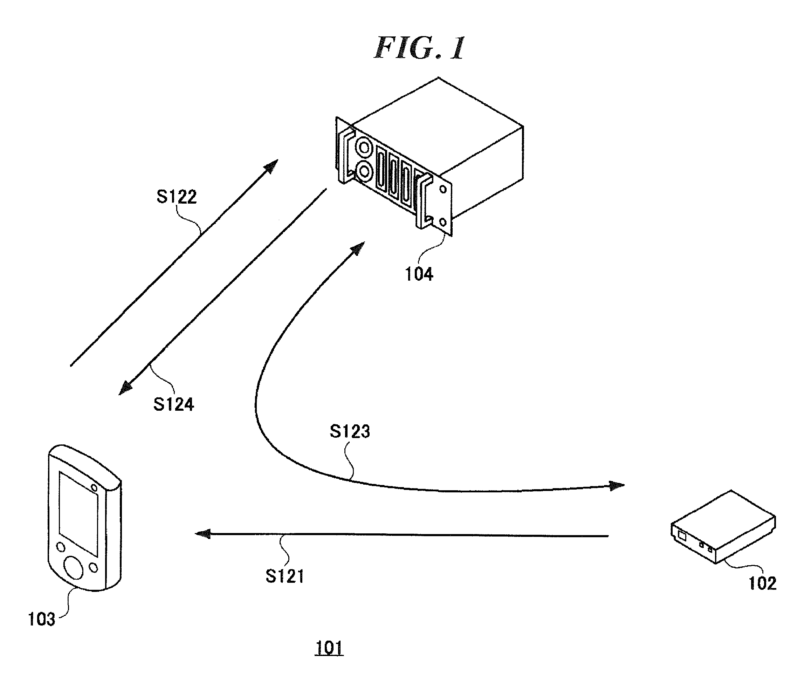

Fig. 1 is an outline view schematically indicating whole construction of a communication system 101 according to the first embodiment.

The beacon device 102, which is one example of communication device set in a store and the like, broadcast-transmits beacon signal including beacon ID and beacon data with a constant transmission time interval. Here, the beacon ID is information to uniquely identify the beacon device 102. When a person with the wireless handy terminal 103 (communication terminal) approaches to the beacon device 102, and the distance between the wireless handy terminal 103 and beacon device 102 becomes shorter than a predetermined distance, the wireless handy terminal 103 receives the beacon ID and the beacon data broadcast-transmitted from beacon device 102 (S121).

Here, in the wireless handy terminal 103, a beacon application program, which conducts predetermined processes based on reception of the beacon signal transmitted from the beacon device 102, is installed and operated.

The wireless handy terminal 103 transmits the beacon ID included in the beacon signal and certification request to the server 104 when receiving the beacon signal (S122).

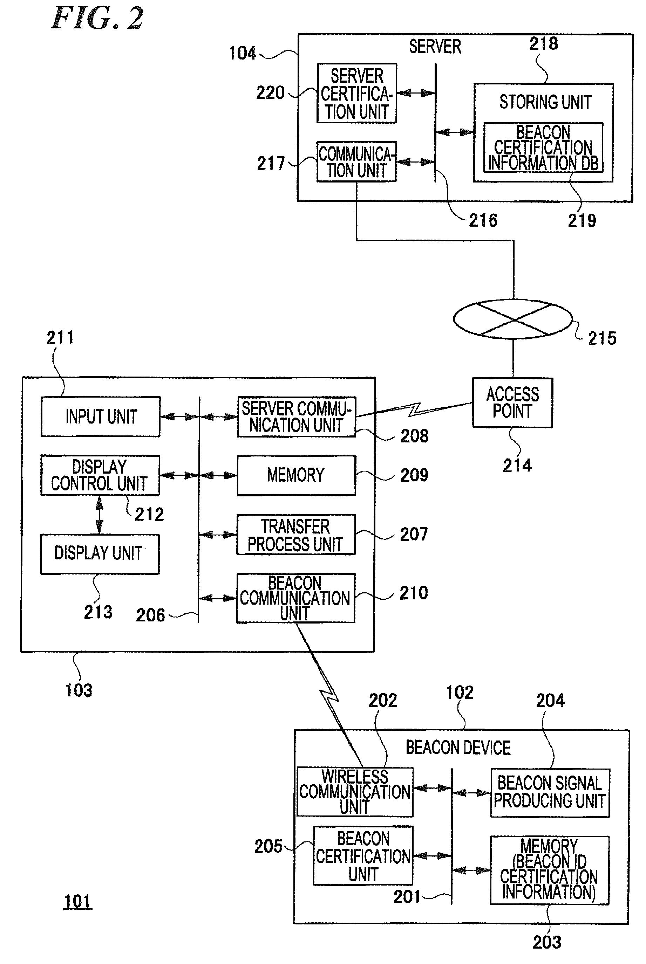

When the server 104 receives the beacon ID and certification request from the wireless handy terminal 103, the server 104 collates the beacon ID with a beacon certification information database 219 (see Fig. 2) formed in a storing unit 218 of the server 104(see Fig. 2). In the beacon certification information database 219, the beacon ID of the beacon device 102 and the certification information of the beacon device 102 are registered beforehand and the server 104 starts a certification process with the beacon device 102 by using the certification information (S123). At that time, the wireless handy terminal 103 relays data transmitted/received between the server 104 and the beacon device 102.

After the certification process is finished between the server 104 and the beacon device 102, the server 104 notifies a result of the certification process to the wireless handy terminal 103 (S124).

The wireless handy terminal 103 makes the process to diverge after the certification process based on the certification result received from the server 104. For example, the beacon device 102 issues the electronic coupon, and if it is judged that the beacon device 102 is a genuine beacon device 102 based on the certification result, the beacon data included in the beacon signal are normally processed. For example, addition process of the electronic coupon is conducted. If it is judged that the cracker is a false beacon device 102 which is set with an unjust purpose, the beacon data included in the beacon signal is processed as unjust data. For example, in case of the electronic coupon, warning is displayed on the display unit without conducting an addition process of the electronic coupon.

Fig. 2 is a functional block diagram of the communication system 101.

In the beacon device 102, a wireless communication unit 202 constructed from a wireless communication circuit is connected to a bus 201 of a well-known microcomputer. Here, the microcomputer has a well-known construction in which a CPU, a ROM and a RAM are connected through the bus 201. A memory 203 is a nonvolatile memory such as a flash memory and the like which is electronically rewritable. In the memory 203, programs to realize function of a beacon signal producing unit 204 and the beacon ID are stored.

Further, in the memory 203, it is stored first data transmitted by an unillustrated data register terminal with the beacon ID in the advertising packet and second data necessary for information concerning certification, the second data being transmitted with the beacon ID in the unicast packet. In the embodiment, the first data is information of the electronic coupon and the second data is a common key which is one instance of certification information. That is to say, the memory 203 functions as a storing unit formed for device side, in which certification information is stored.

The beacon signal producing unit 204 encodes the beacon ID and the beacon data in a data frame according to the BLE standard and sends encoded data to the wireless communication unit 202 with a predetermined time interval. The data frame produced by the beacon signal producing unit 204 changes corresponding to a communication state. In a case that the broadcast transmission is conducted, the data frame is the advertising packet, and in a case that two-way communication is conducted, the data frame is the unicast packet.

A beacon certification unit 205 produces data necessary for the certification process mentioned later by using the certification information stored in the memory 203, corresponding to a request of the beacon signal producing unit 204. And the certification unit 205 conducts the certification process against the server 104 and stores the result in the memory 203.

The wireless communication unit 202, functioning as a terminal communication unit to communicate with the communication terminal, executes a predetermined modulation process in the data frame received from the beacon signal producing unit 204 and conducts broadcast transmission on the 2.4 GHz electric wave. Furthermore, as needed, the wireless communication unit 202 conducts unicast two-way communication with the wireless handy terminal 103. In the case of the present embodiment, two-way communication with the wireless handy terminal is performed in a certification process described later. In a case that contents sent by the broadcast transmission with the beacon ID by using a predetermined register terminal are registered in the memory 203, the wireless communication unit 202 conducts two-way communication with an unillustrated data register terminal.

Here, explanation will back to the beacon signal.

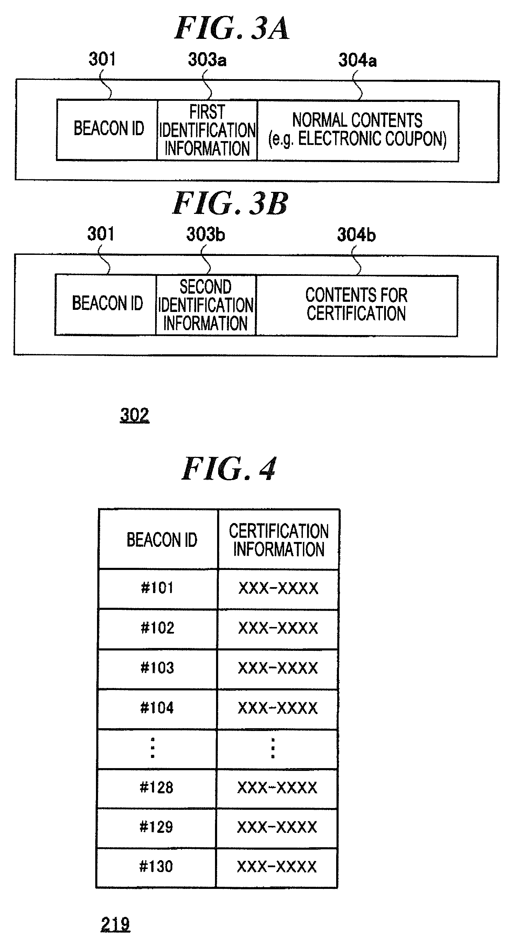

Figs. 3A and 3B are explanatory views each showing one example of a beacon signal. The beacon device 102 conducts broadcast transmission of the beacon signal 302 including the beacon ID 301 and predetermined contents with a predetermined time interval.

Fig. 3A shows one example of an advertising packet. The contents are formed from the first identification information 303a and the normal contents 304a. The first identification information 303a indicates that the normal contents 304a following the first identification information 303a are contents to which a predetermined process is to be conducted for the wireless handy terminal 103. The normal contents 304a, in the embodiment, indicate the electronic coupon data stored in the memory 203.

Here, it is possible that the beacon device 102 conducts the broadcast transmission of only the beacon ID 301.

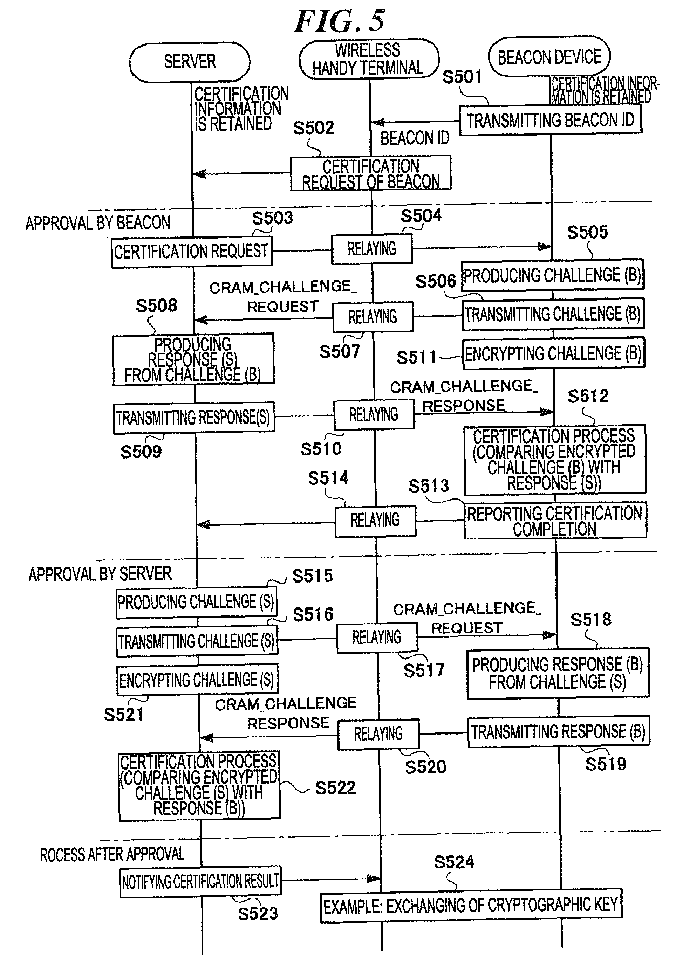

Fig. 3B indicates one example of the unicast packet. The contents are formed from the second identification information 303b and the contents for certification 304b. The second identification information 303b indicates that the normal contents 304a following the second identification information 303b are contents to be transmitted to the server 104 for the wireless handy terminal 103. The contents for certification 304b, in the embodiment, indicates a challenge value and a response value described in Fig. 5 (mentioned later), for instance.

Retuning to Fig. 2, the communication system 101 will be continuously described.

In the wireless handy terminal 103, to a bus 206 of a well-known microcomputer, it is connected a transfer processing unit 207, a server communication unit 208, a memory 209, a beacon communication unit 210, an input unit 211 and a display control unit 212. To the display control unit 212, a display unit 213 is connected.

The transfer processing unit 207 is a unit of function provided by the beacon application program. The transfer processing unit 207 judges whether or not the beacon data are to be transferred to the server 104 based on the identification information of the beacon data received from the beacon device 102 through the beacon communication unit 210. If judged that the beacon data are to be transferred, the contents for certification 304b added to the beacon data are transferred to the server 104. Further, the transfer processing unit 207 judges whether or not the data received from the server 104 are to be transferred to the beacon device 102 based on the identification information of the data received from the server 104 through the server communication unit 208. If judged that the data from the server 104 are to be transferred, the data for certification added to the above data are transferred to the beacon device 102.

The server communication unit 208 includes a transmission circuit and a reception circuit necessary for wireless communication. For example, the server communication unit 208 forms connection to an access point 214 through the communication standard such as LTE (Long Term Evolution), and connects the wireless handy terminal 103 to an internet network 215 through the access point 214. Here, the server communication unit 208 may be a well-known wireless LAN.

The memory 209 is a nonvolatile memory such as flash memory which is electrically rewritable. In the memory 209, it is stored firmware, OS and beacon application program for operating the wireless handy terminal 103. Further, in the memory 209, it is stored electronic coupon information included in the beacon signal 302 received though the beacon communication unit 210 from the beacon device 102.

The input unit 211 is constructed from, for example, an electrostatic touch panel. Operation by a user is entered though the input unit 211 and operation information is produced. The display unit 213 is formed from, for example, a liquid crystal display. The input unit 211 and the display unit 213 are integrally superimposed, thereby a well-known touch panel is constructed.

The display control unit 212 corresponds to a unit of function provided by the beacon application program and produces information to control the display unit 213. Concretely, in a case that it is received from the server 104 judgment result information indicating that the beacon device 102 is genuine, the display control unit 212 controls the display unit 213 so as to display information indicating that the electronic coupon belonging to the user of the wireless handy terminal 103 is added. Further, the display control unit 212 conducts addition process concerning the electronic coupon and renewal process of the information of the electronic coupon stored in the memory 209.

The server 104 is a well-known computer connected to the internet network 215. A communication unit 217 connected to a bus 216 includes well-known NIC (Network Information Card) and TCP/IP protocol stack and communicates with the wireless handy terminal 103 through the internet network 215. The protocol is, for example, an encrypted HTTPS (Hypertext Transport Protocol Secure) using SSL/TLS defined in RFC2246. In this case, the server 104 functions as a well-known web server. In a storing unit 218 connected to the bus 216 and constructed from a nonvolatile storage such as a hard disc device and the like, a beacon certification information database 219 (represented as beacon certification information DB in Fig. 2) is stored. The storing unit 218 is a storing unit for the server storing terminal certification information.

### [CONSTRUCTION OF BEACON CERTIFICATION INFORMATION DATABASE 219]

Here, the beacon certification information database 219 will be described.

Fig. 4 is an explanatory view showing one example of beacon certification information database 219.

The beacon certification information database 219 is divided into a beacon ID field and a certification information field.

In the beacon ID field, the beacon ID 301 of the beacon device 102 is stored.

In the certification information field, the certification information is stored, that is, the common key is stored in the memory 203 of the beacon device 102.

Again returning to Fig. 2, description of the server 104 will be continued.

A server certification unit 220 connected to the bus 216 searches the beacon certification information database 219 based on the beacon ID 301 which is inquired from the wireless handy terminal 103 and obtains the certification information from the certification information field. Further, the server certification unit 220 conducts a certification process mentioned later with the beacon device 102. Here, communication is normally done with the wireless handy terminal 103 through a communication unit 217.

After a series of the certification processes are completed, the server certification unit 220 returns to the wireless handy terminal 103 though the communication unit 217 a certification result whether or not the beacon device 102 concerning with the beacon ID 301 inquired from the wireless handy terminal 103 is the genuine beacon device 102 which is installed in the store by the proper owner.

Similar to the beacon device 102, the server 104 transmits two kinds of messages, one of which is a message to request information process and the other of which is a message to request transferring to the beacon device 102, against the wireless handy terminal 103. For example, at the head portion of contents in the HTTP response message, two returns (carriage return and line feed), a character string indicating message classification and further two returns are added, thereafter desired data are attached. The transfer process unit 207 of the wireless handy terminal 103 recognizes the character string indicating message classification existing in the head of the HTTP response message received from the server 104 and judges whether the following data are to be processed by the display control unit 212 or transferred to the beacon device 102.

### {PROCESS EXAMPLE OF COMMUNICATION SYSTEM 101]

Fig. 5 is a process flowchart showing a communication flow conducted among a beacon device 102, a wireless handy terminal 103 and a server 104.

The beacon device 102 conducts broadcast transmission of the beacon data with a predetermined time interval. When the wireless handy terminal 103 approaches the beacon device 102, the wireless handy terminal 103 receives the beacon data transmitted through the broadcast transmission by the beacon device 102 (S501).

The display control unit 212 of the wireless handy terminal 103 analyzes the beacon data received through beacon communication unit 210, and after recognizing the beacon data including the electronic coupon, the display control unit 212 starts the transfer process unit 207.

The transfer process unit 207 transmits the certification request of the beacon device 102 with the beacon ID of the beacon device 102 through the server communication unit 208 to the server 104 (S502).

### [APPROVAL OF SERVER 104 BY THE BEACON DEVICE 102]

When receiving the certification request of the beacon device 102 from the wireless handy terminal 103 through the communication unit 217, the server certification unit 220 transmits a message for certification request to the beacon device 102 (S503).

The transfer process unit 207 of the wireless handy terminal 103 analyzes the character string indicating message classification of the message received from the server 104 through the server communication unit 208, as a result, recognizes that such message is an object to transmit to the beacon device 102. Thereafter, the transfer process unit 207 transfers such message to the beacon device 102 through the beacon communication unit 210 (S504).

When the message of certification request transmitted from the server 104 is received through the wireless communication unit 202 from the wireless handy terminal 103, the beacon certification unit 205 of the beacon device 102 produces a challenge value formed from a random number of a predetermined bit width (that is, challenge (B) shown in Fig. 5) (S505) and transfers the challenge value to the beacon signal producing unit 204. The beacon signal producing unit 204 puts this challenge value into the unicast packet and transmits this packet to the wireless handy terminal 103 through the wireless communication unit 202 (S506).

In step S505, the beacon certification unit 205 functions as a device producing unit for producing the challenge value which is the device request information.

In step S506, the wireless communication unit 202 functions as a device transmitting unit for transmitting the challenge value which is the device request information to the wireless handy terminal 103.

The transfer process unit 207 of the wireless handy terminal 103 analyzes the second identification information 303b of the beacon data received form the beacon device 102 through the beacon communication unit 210 and recognizes that contents of the beacon data is the contents for certification 304b, thereafter transfer process unit 207 transfers this contents to the server 104 through the server communication unit 208 (S507).

When receiving the challenge value transmitted from the beacon device 102 through the wireless handy terminal 103 and the communication unit 217, the server certification unit 220 of the server 104 produces the response value (that is, response (S) shown in Fig. 5) (S508). Concretely, at first, the server certification unit 220 searches the beacon certification information database 219 based on the beacon ID of the beacon device 102 received from the wireless handy terminal 103 at step 502 (S502), thereby obtains the certification information of the beacon device 102, that is the common key. Thereafter, the server certification unit 220 encrypts the challenge value produced by the beacon device 102 by using the common key. This encrypted challenge value is the response value.

The server certification unit 220 of the server 104 transmits the response value produced at step S508 to the wireless handy terminal 103 through the communication unit 217 (S509). At the steps S508 and S509, the server certification unit 220 functions as the server response unit which produces the response value corresponding to the terminal response information by using the common key and applying the common key to the challenge value corresponding to the device request information from the beacon device 102 and sends the response value to the wireless handy terminal 103.

The transfer process unit 207 of the wireless handy terminal 103 analyzes the character string indicating message classification of the message received from the server 104 through the server communication unit 208 and recognizes that such message becomes the object to be transferred to the beacon device 102, further transfers such message to the beacon device 102 through the beacon communication unit 210 (S510).

Meanwhile, the beacon certification unit 205 of the beacon device 102 encrypts the challenge value produced at step S505 by using the common key stored in the memory 203 after step S506 (S511).

When receiving the response value transmitted from the server 104 through the wireless communication unit 202 from the wireless handy terminal 103, the beacon certification unit 205 compares whether or not the response value coincides with the encrypted challenge value produced at step S511 and certifies (S512). Further, the beacon certification unit 205 stores the certification result in the memory 203 as the flag information (not shown) and sends the message indicating that the certification is completed to the beacon signal producing unit 204. The beacon signal producing unit 204 puts this message into the unicast packet and transmits this message to the wireless handy terminal 103 through the wireless communication unit 202 (S513). At the time of S512 and S513, the beacon certification unit 205 compares the response value corresponding to the terminal response information transmitted from the wireless handy terminal 103 with the encrypted challenge value corresponding to the device collation information produced by applying the common key stored in the memory 203 to the challenge value corresponding to the device request information, thereby functions as the device judgment unit which judges legitimacy of the wireless handy terminal 103.

The beacon certification unit 205 stores the certification result in the memory 203 as the flag information (not shown) and sends the message indicating that the certification is completed to the beacon signal producing unit 204. The beacon signal producing unit 204 puts this message into the unicast packet and transmits this message to the wireless handy terminal 103 through the wireless communication unit 202 (S513).

The transfer process unit 207 of the wireless handy terminal 103 analyzes the second identification information 303b of the beacon data received from the beacon device 102 through the beacon communication unit 210 and recognizes that contents of the beacon data is the contents for certification 304b, thereby transfers the contents to the server 104 through the server communication 208 (S514).

As a result, certification of the server 104 by the beacon device 102 is completed.

Here, it may be conceivable: after certification is completed, the wireless communication unit 202 of the beacon device 102 refers the flag information indicating certification result stored in the memory 203 and when it is judged that the server 104 is legitimate, the wireless communication unit 202 functions to permit communication from the wireless handy terminal 103.

### [CERTIFICATION OF THE BEACON DEVICE 102 BY SERVER 104]

When receiving the message indicating that certification is completed transmitted from the beacon device 102 through the wireless communication unit 202 from the wireless handy terminal 103, the server certification unit 220 produces the challenge value constructed from a random number with a predetermined bit width (that is, challenge (S) shown in Fig. 5) (S515). Further, the server certification unit 220 transmits the challenge value to the wireless handy terminal 103 though the communication unit 217 (S516).

At step S515, the server certification unit 220 functions as the server producing unit producing the challenge value corresponding to the terminal request information.

The transfer process unit 207 of the wireless handy terminal 103 analyzes the character string indicating message classification of the message received from the server 104 through the server communication unit 208 and recognizes that such message is the object to be transferred to the beacon device 102, thereby transfers the message to the beacon device 102 thorough the beacon communication unit 210 (S517).

The beacon certification unit 205 of the beacon device 102 encrypts the challenge value transmitted from the server 104 and received from the wireless handy terminal 103 through the wireless communication unit 202 by using the common key stored in the memory 203 and produces the response value (that is, response (B) shown in Fig. 5) (S518).

The beacon certification unit 205 sends the response value produced at S518 to the beacon signal producing unit 204. The beacon signal producing unit 204 puts the response value into the unicast packet and sends this to the wireless handy terminal 103 through the wireless communication unit 202 (S519). At steps S518 and S519, the beacon certification unit 205 functions as the device response unit which produces the response value corresponding to the device response information by using the common key stored in the memory 203 and transmits the response value to the wireless handy terminal 103.

The transfer process unit 207 of the wireless handy terminal 103 analyzes the second identification information 303b of the beacon data received from the beacon device 102 through the beacon communication unit 210 and recognizes that contents of the beacon data are contents for certification 304b, thereby transfers the contents to the server 104 through the server communication unit 208 (S520).

Meanwhile, after step S516, the server certification unit 220 of the server 104 encrypts the challenge value produced at step S515 based on the common key obtained from the beacon certification information database 219 at step S508 (S521). Here, operation to obtain the common key from the beacon certification information database 219 may be done after step S514. That is, based on the beacon ID included in the beacon data transferred from the beacon device 102, the beacon certification information database 219 is searched.

At the time of step 521, the server certification unit 220 encrypts the terminal request information by using the common key stored in the beacon certification information database 219, thereby functions as the server collation information producing unit which produces the encrypted challenge value corresponding to the terminal collation information.

When the response value transmitted from the beacon device 102 through the communication unit 217 from the wireless handy terminal 103 is received, the server certification unit 220 compares whether or not the response value coincides with the encrypted challenge value produced at step S521 and conducts certification (S522). At the time of step S522, the server certification unit 220 functions as the server judging unit conducting certification of the beacon device 102 by comparing the response value corresponding to the device response information transmitted from the beacon device 102 with the encrypted challenge value.

As mentioned, certification of the beacon device 102 by the server 104 is completed.

The server certification unit 220 stores the certification result in the server storing unit 218 which functions as the server storing unit and transmits the message indicating that certification is completed to the wireless handy terminal 103 through the communication unit 217 (S523).

The transfer process unit 207 of the wireless handy terminal 103 analyzes the character string indicating message classification of the message received from the server 104 through the server communication unit 208 and recognizes that the message is the object not to be transferred to the beacon device 102, thereby delivers such message to the display control unit 212. The display control unit 212 of the wireless handy terminal 103 executes the predetermined processes concerned with the beacon data such as addition process of the electronic coupon based on that certification is completed.

At that time, since the certification is completed by the server 104, the wireless handy terminal 103 can judge that the beacon device 102 is a reliable device with which communication can be safely done. For example, it is conceivable that the beacon communication unit 210 of the wireless handy terminal 103 may exchange a cryptographic key to safely conduct communication in the future with communication unit 217 of the beacon device 102 and thereafter may directly conduct certification by using the exchanged cryptographic key without certification through the server 104 when conducting communication with the beacon device 102 in the future (S524).

The wireless handy terminal 103 does not have the common key which is the certification information, different from the server 104 and the beacon device 102. Accordingly, the transfer process unit 207, which relays communication between the server 104 and the beacon device 102 and functions as the terminal device communication unit and the terminal server communication unit, cannot know contents of communication at steps S504, S507, S510, S514, S517 and S520. For example, at step S510, since the wireless handy terminal 103 does not have the common key which is given to the server 104 and the beacon device 102, the transfer process unit 207 cannot understand if the transferred data correspond to the response value encrypted by using what kind of common key. Therefore, although it is troublesome if the common key is leaked to the other than the server 104 and the beacon device 102, in the communication system 101 according to the embodiment, confidentiality of the common key can be secured.

For example, even if a third party with malice attacks man-in-the-middle attack between the server 104 and the beacon device 102, certification between the beacon device 102 and the server 104 concludes to fail and the server 104 cannot certify the beacon device 102 without genuine common key (that is, false beacon device 102). The same result may occur in a case of certification of the server 104 by the beacon device 102.

The transfer process unit 207 judges whether data to be transferred from beacon device 102 to the server 104 or from the server 104 to the beacon device 102 exist, thereafter if judged that data to be transferred exist, the transfer process unit 207 transfers data from origin of transfer to forwarding address without confirming contents of data. That is to say, the transfer process unit 207 conducts operations similar to, so-called, application gateway or proxy server between TCP/IP network and BLE network.

In order that the transfer process unit 207 functions as application gateway, it is necessary to provide identification information indicating whether to be transferred or not in the payload of unicast packet in BLE network or in the message in TCP/IP network.

Here, when certification is mutually done between the server 104 and the beacon device 102, it is desirable that procedures are executed according to the order shown in Fig. 5. In a case that a connection destination (server 104) is not yet reliable, it is necessary that the beacon device 102 does not return cryptogram (here, response) to the wireless handy terminal 103, so that a connection destination with malice cannot assume the wireless handy terminal 103 and cannot conduct chosen plaintext attack to the beacon device 102. That is to say, it is preferable that step S519 is conducted on the presupposition that step S512 is normally completed. For example, in Fig. 5, the beacon device 102 reports to the server 104 that certification of the server 104 (S521) is normally completed (S513) and the server 104 upon receiving such report transmits the challenge value to the beacon device 102.

Here, as the other example, it is conceivable that the server 104 transmits the produced challenge value to the beacon device 102 at the same time or almost at the same time as the beacon device 102 sends the challenge value. In this case, it is preferable that the beacon device 102 produces and transmits the response value (S518 to S519) after certification of the serve 104 (that is, S512 in Fig. 5) is normally completed.

Further, it is conceivable that CRAM is executed only one time during connection, and when second CRAM is started from the connection destination, error is transmitted and connection is shut down.

In the embodiment, applications below can be done.
(1) In Fig. 5, although mutual certification is executed between the beacon device 102 and the server 104, it is conceivable that certification of only one side is conducted.
   In a case that the wireless handy terminal 103 receives the beacon signal from the beacon device 102, in order to confirm whether the beacon device 102 is legitimate, it is enough if certification of the beacon device 102 by the server 104 from step S515 to step S522 can be done. Since the beacon device 102 transmits the beacon signal by broadcast transmission, it is not necessary to mind whether or not the transmission destination is legitimate. In this case, procedures may shift from step S501, S502 to step S515. That is to say, procedures from step S503 to step S514 may be omitted.
(2) Similarly, in a case that set information of the beacon device 102 is changed by the server 104 through the wireless handy terminal 103, it is preferable that the beacon device 102 confirms whether the wireless handy terminal 103 is legitimate or not through the server 104, in order to reject change of set information by the illegitimate wireless handy terminal 103. For example, it is conceivable that the server 104 completes certification of the wireless handy terminal 103 beforehand by any method. In this case, the beacon device 102 can indirectly judge that the wireless handy terminal 103 is a reliable device.
   Here, at that time, the certification of the beacon device 102 is not always essential by the server 104, that is, by the wireless handy terminal 103 side. For example, order of the procedures in this case continues from step S501, S502, S503 to step 514, thereafter it is preferable that the procedure shits from step S514 to step S523. That is to say, steps from step S515 to step S522 may be omitted.
(3) Corresponding to circumstance where the beacon device 102 is provided, internet connection means such as wireless LAN and the like being implemented in the beacon device 102, it may be selectable certification by functioning the wireless handy terminal 103 as a relaying device and certification by directly communicating the beacon device 102 with the server 104 without using the wireless handy terminal 103. When the beacon device 102 and the server 104 can directly communicate, communication overhead becomes small without using the wireless handy terminal 103 for certification. After completing certification, only result thereof is reported to the wireless handy terminal 103 from the server 104.
(4) The beacon device 102 may certify the server 104 by using the other wireless handy terminal 103 as a relaying device. In such case, since the challenge or the response is encrypted so as not to be decrypted by the other devices, information such as the response including cryptographic key is not leaked outside.
(5) Certification between the beacon device 102 and the server 104 in the embodiment may be conducted through different procedures from the procedures explained in Fig. 5. The wireless handy terminal 103 may conduct approval request to send the challenge value (that is, steps S505 to S506 in Fig. 5) to the server 104 in order to convince the beacon device 102 that the wireless handy terminal itself is reliable origin of transmission when conducting transmission to the beacon device 102. Contrarily, as an opportunity that the wireless handy terminal 103 communicates with the beacon device 102, the beacon device 102 may communicate with the server 104 in order to judge legitimacy of the wireless handy terminal 103, and may transmit the produced challenge (that is, steps S505 to S506 in Fig. 5).
(6) The server certification unit 220 may store the challenge value in the storing unit 218 after producing (that is, step S515 in Fig. 5) the challenge value (that is, challenge (S) in Fig. 5) when certification by the server 104 is conducted until after completing the certification (that is, step S522 in Fig. 5) of at least the beacon device 102. At that time, the challenge value stored in the storing unit 218 is referred by the server certification unit 220 when the challenge value transmitted from the beacon device 102 is received by the wireless handy terminal 103 (that is, pre-stage of step S508 in Fig. 5) in the certification process with the other beacon device. At that time, the server certification unit 220 does not code the challenge value (that is, production of response value) when the received challenge value coincides with the challenge value stored in the storing unit 218.

For example, it is conceivable that non-authorized beacon installed by the third party with malice transmits the challenge value with the authorized beacon ID to the server 104, assuming that the challenge value received from the server 104 (that is, challenge (S) in Fig. 5) is the challenge value produced by itself (that is, challenge (B) in Fig. 5). In this case, since the server certification unit 220 returns the challenge value after the received challenge value is encrypted (that is, producing response (S) in Fig. 5), non-authorized beacon device can obtain the challenge value encrypted by the authorized cryptographic key which is inherently unknown, thereby certification can be obtained by the server 104.

In this application, the challenge value produced by the server certification unit 220 does not become the object for encryption until the certification process using at least the challenge value is normally finished (or until timeout), thereby attack using non-authorized beacon in the above can be avoided.

In the embodiment, the communication system 101 is disclosed.

Legitimacy of the beacon device 102 is judged by certification with the server 104. In communication for this certification, the wireless handy terminal 103 functions as a relaying device. Thereby, reliability of the communication system 101 including the beacon device 102 is improved, therefore it can be provided service such as electronic coupon and the like. Here, in the embodiment, as one example of communication device, the beacon device sending the beacon signal is explained. However, the communication device is not limited to the beacon device, and the device with communication function can function as the communication device in the present invention.

### [SECOND EMBODIMENT: WHOLE CONSTRUCTION OF COMMUNICATION SYSTEM IN MODIFICATION]

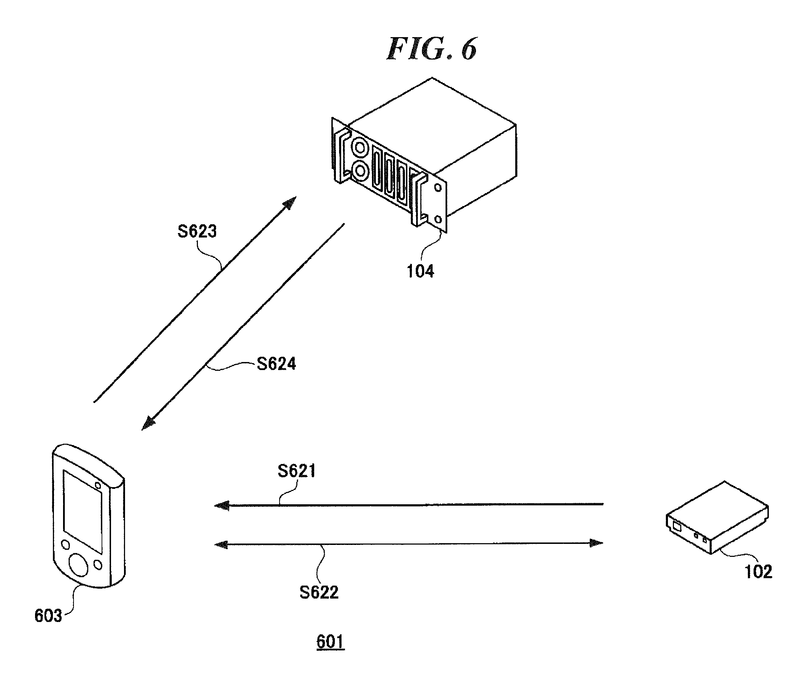

Fig. 6 is an outline view schematically indicating whole construction of a communication system 601, which is a modification of the communication system 101, according to the second embodiment.

In the modification, the beacon device 102 as one example of the communication device conducts broadcast transmission of the beacon signal including the beacon ID and the beacon data with a predetermined time interval.

When receiving the beacon signal (S621), the wireless handy terminal 603 starts certification process for the beacon device 102 (S622). At that time, the wireless handy terminal 603 transmits the beacon ID included in the beacon signal to the server 104 and requests information used in certification with the beacon device (S623).

When the server 104 receives the beacon ID and certification request from the wireless handy terminal 603, the server 104 produces the information used for certification with the beacon device 102 by using certification information stored in the beacon certification information database 219 provided in the storing unit 218 of the server 104 and transmits it to the wireless handy terminal 603 (S624). The wireless handy terminal 603 certifies with the beacon device 102 by using information transmitted from the server 104.

That is to say, in the modification, the wireless handy terminal 603 conducts certification process with the beacon device 102 by using certification information to certify the beacon device 102 stored in the storing unit 218 of the server 104.

### [CONSTRUCTION OF WIRELESS HANDY TERMINAL 603 IN MODIFICATION]

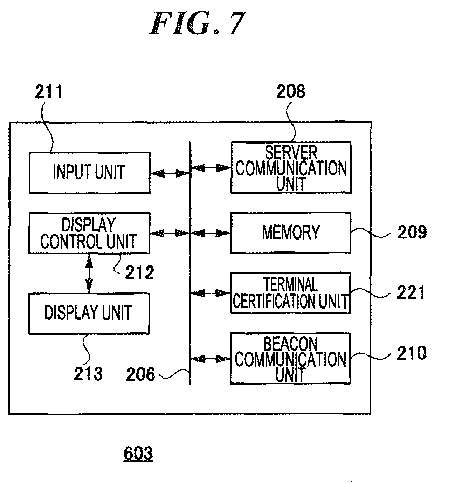

FIG. 7 is a function block diagram of the wireless handy terminal 603.

In the wireless handy terminal 603, to a bus 206 of a well-known microcomputer, it is connected a server communication unit 208, a memory 209, a beacon communication unit 210, an input unit 211, a display control unit 212 and a terminal certification unit 221. To the display control unit 212, a display unit 213 is connected.

The terminal certification unit 221 conducts production of data necessary for certification process mentioned later and certification process for the beacon device 102.

### [CONSTRUCTION OF BEACON DEVICE 102 AND SERVER 104 IN MODIFICATION]

The beacon certification unit 205 in modification produces data necessary for the certification process mentioned later by using the certification information stored in the memory 203, corresponding to request of the beacon signal producing unit 204. And the beacon certification unit 205 conducts the certification process for the wireless handy terminal 103 and stores the result in the memory 203.

The server certification unit 220 in the modification searches the beacon certification database 219 based on the beacon ID 301 inquired from the wireless handy terminal 103, obtains certification information from the certification information field and produces data necessary to certify between the wireless handy terminal 103 and the beacon device 102.

### [PROCESS EXAMPLE OF COMMUNICATION SYSTEM 601]

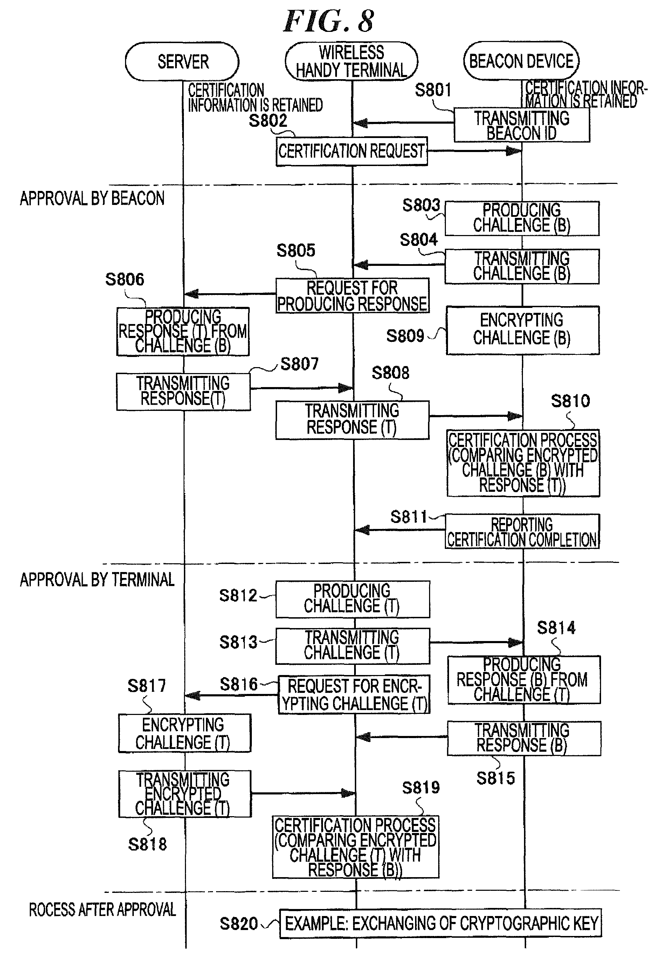

Fig. 8 is a process flowchart showing a communication flow conducted among a beacon device 102, a wireless handy terminal 603 and a server 104.

The beacon device 102 conducts broadcast transmission of the beacon data with a predetermined time interval. When the wireless handy terminal 603 approaches the beacon device 102, the wireless handy terminal 603 receives the beacon data transmitted through the broadcast transmission by the beacon device 102 (S801).

The display control unit 212 of the wireless handy terminal 603 analyzes the beacon data received through beacon communication unit 210, and after recognizing the beacon data including the electronic coupon, the display control unit 212 starts the terminal certification unit 221.

The terminal certification unit 221 transmits the message requesting certification to the beacon device 102 through the beacon communication unit 210 (S802).

### [APPROVAL OF WIRELESS HANDY TERMINAL 603 BY BEACON DEVICE 102]

When the message of certification request transmitted from the wireless handy terminal 603 is received, the beacon certification unit 205 of the beacon device 102 produces a challenge value formed from a random number of a predetermined bit width (that is, challenge (B) shown in Fig. 8) (S803) and transfers the challenge value to the beacon signal producing unit 204. The beacon signal producing unit 204 puts this challenge value into the unicast packet and transmits this packet to the wireless handy terminal 603 through the wireless communication unit 202 (S804). Here, in this case, the beacon signal producing unit 204 stores identification information which indicates that the normal contents 304a intends to the wireless handy terminal 603 as the second identification information 303b of the beacon data and are not contents to be transferred to the server 104.

In step 803, the beacon certification unit 205 functions as device producing unit producing challenge value corresponding to device request information.

When obtaining the challenge value included in the beacon data received from the beacon device 102 through the beacon communication unit 210, the terminal certification unit 221 of the wireless handy terminal 603 transmits the challenge value with the beacon ID of the beacon device 102 to the server 104 and requests to produce the response value (S805).

When receiving the challenge value transmitted from the wireless handy terminal 603 through the communication unit 217, the server certification unit 220 of the server 104 produces the response value (that is, response (T) shown in Fig. 8) (S806). Concretely, at first, the server certification unit 220 searches the beacon certification information database 219 based on the beacon ID of the beacon device 102 received from the wireless handy terminal 603, thereby obtains the certification information of the beacon device 102, that is, the common key. Thereafter, the server certification unit 220 encrypts the challenge value transmitted from the wireless handy terminal 603 by using the obtained common key. This encrypted challenge value is the response value.

The server certification unit 220 of the server 104 transmits the response value produced at step S806 to the wireless handy terminal 603 through the communication unit 217 (S807). At the steps S806 and S807, the server certification unit 220 functions as the server response unit which produces the response value corresponding to the terminal response information by using the common key and applying the common key to the challenge value corresponding to the device request information from the beacon device 102 and sends the response value to the wireless handy terminal 603.

The terminal certification unit 221 of the wireless handy terminal 603 analyzes the character string indicating message classification of the message received from the server 104 through the server communication unit 208 and recognizes that such message becomes the object to be transferred to the beacon device 102, further transfers such message to the beacon device 102 through the beacon communication unit 210 (S808).

Meanwhile, the beacon certification unit 205 of the beacon device 102 encrypts the challenge value produced at S803 by using the common key stored in the memory 203 after step S804 (S809).

When receiving the response value from the wireless handy terminal 603 through the wireless communication unit 202, the beacon certification unit 205 compares whether or not the response value coincides with the encrypted challenge value produced at S809 and certifies (S810). At the time of S5609 and S810, the beacon certification unit 205 compares the response value corresponding to the terminal response information transmitted from the wireless handy terminal 603 with the encrypted challenge value corresponding to the device collation information produced by applying the common key stored in the memory 201 to the challenge value corresponding to the device request information, thereby functions as the device judgment unit which judges legitimacy of the wireless handy terminal 603.

The beacon certification unit 205 stored the certification result in the memory 203 as the flag information (not shown) and sends the message indicating that the certification is completed to the beacon signal producing unit 204. The beacon signal producing unit 204 puts this message into the unicast packet and transmits this message to the wireless handy terminal 603 through the wireless communication unit 202 (S811).

Accordingly, certification of the wireless handy terminal 603 by the beacon device 102 is completed.

When the wireless communication unit 202 of the beacon device 102 judges that the wireless handy terminal 603 is legitimate by referring to the flag information of the certification result stored in the memory 203, communication from the wireless handy terminal 603 may be permitted.

### [APPROVAL OF BEACON DEVICE 102 BY WIRELESS HANDY TERMINAL 603]

When receiving the message transmitted from the beacon device 102 through the beacon communication unit 210 indicating that certification is completed, the terminal certification unit 221 of the wireless handy terminal 603 produces the challenge value constructed from random number with a predetermined bit width (that is, challenge (T) shown in Fig. 8) (S812). Further, the terminal certification unit 221 transmits the challenge value to the beacon device 102 (S813).

At step S812, the terminal certification unit 221 functions as the terminal producing unit producing the challenge value corresponding to the terminal request information.

The beacon certification unit 205 of the beacon device 102 encrypts the challenge value transmitted from the server 104 and received from the wireless handy terminal 603 through the wireless communication unit 202 by using the common key stored in the memory 203 and produces the response value (that is, response (B) shown in Fig. 8) (S814).

The beacon certification unit 205 sends the response value produced in step S814 to the beacon signal producing unit 204. The beacon signal producing unit 204 puts the response value into the unicast packet and sends this to the wireless handy terminal 603 through the wireless communication unit 202 (S815). At steps S814 and S815, the beacon certification unit 205 functions as the device response unit which produces the response value corresponding to the device response information by using the common key stored in the memory 203 and transmits the response value to the wireless handy terminal 603.

The terminal certification unit 221 of the wireless handy terminal 603 transmits the produced challenge value to the server 104 through the server communication unit 208 and request for encryption of the challenge value, at the same time of or almost at the same time as at step S813 (S816).

The server certification unit 220 of the server 104 encrypts the challenge value transmitted from the wireless handy terminal 603 by using the common key obtained from the beacon certification information database 219 (S817). The server certification unit 220, for example, searches the beacon certification information database 219 based on the beacon ID included in the beacon data transmitted from the wireless handy terminal 603.

The server certification unit 220 transmits the encrypted challenge value produced in step S817 to the wireless handy terminal 603 through the communication unit 217 (S818). At this time of steps S817 and S818, the server certification unit 220 functions as the server collation information producing unit which encrypts the terminal request information by using the common key stored in the beacon certification information database 219 and produces the encrypted challenge value which becomes terminal collation information, thereafter transmits the encrypted challenge value to the wireless handy terminal 603.

After the encrypted challenge value transmitted from the server 104 through the server communication unit 208 and the response value transmitted from the beacon device 102 through the beacon communication unit 210 are received, the terminal certification unit 221 of the wireless handy terminal 603 compares whether or not the response value coincides with the encrypted challenge value and conducts certification (S819). At the time of step S819, the terminal certification unit 221 functions as terminal judging unit for judging legitimacy of the beacon device 102 by comparing the response value corresponding to the device response information transmitted from the beacon device 102 with the encrypted challenge value corresponding to the terminal collation information transmitted from the server 104.

As mentioned, certification of the beacon device 102 by the wireless handy terminal 603 is completed.

Through series of processes described above, mutual certification such that the wireless handy terminal 603 is judged to be legitimate by the beacon device 102 and the beacon device 102 is judged to be legitimate by the wireless handy terminal 603 is completed.

At that time, based on that certification by the server 104 is completed, the wireless handy terminal 603 can judge that the beacon device 102 is a reliable device with which communication can be safely done. For example, the beacon communication unit 210 of the wireless handy terminal 603 may exchange the cryptographic key to safely conduct communication with the communication unit 217 of the beacon device 102 in the future and the beacon communication unit 210 may directly certify by using the exchanged cryptographic key without certification through the server 104 in communication with the beacon device 102 in the future (S820).

In the above, although the embodiments of the present invention are described, the present invention is not limited to the embodiments described in the above. Various modifications and applications can be included so long as not deviating from a scope of the present invention described in claims.

For example, in the above mentioned embodiments, in order to understandably explain, the construction of the device and the system is concretely described in detail, therefore the present invention is not necessarily limited to the system which has all constructions described in the above. Further, a part of construction in one embodiment may be exchanged with a part of construction in the other embodiment and construction in one embodiment may be added to construction in the other embodiment. Furthermore, concerning a part of construction in each of the embodiments, the other construction may be added, deleted and exchanged therewith.

A part of or whole of construction, function and processing unit in the above may be, for example, realized by hardware by designing from integrated circuits. Further, each construction, function and the like may be realized by software according to which the processor interprets and executes programs to realize each of functions. Information such as programs, tables and files can be stored in volatile or non-volatile storage such as memory, hard disc, SSD (Solid State Drive) and the like, or in storage medium such as IC card, optical disc and the like.

Only control lines or information lines necessary for explanation are indicated and all control lines or information lines are not necessarily indicated for the product. Really, it may consider that almost all constructions are mutually connected.

### Reference Signs List

- 101: communication system,
- 102: beacon device,
- 103: wireless handy terminal,
- 104: server,
- 201: bus,
- 202: wireless communication unit,
- 203: memory,
- 204: beacon signal producing unit,
- 205: beacon certification unit,
- 206: bus,
- 207: transfer process unit,
- 208: server communication unit,
- 209: memory,
- 210: beacon communication unit,
- 211: input unit,
- 212: display control unit,
- 213: display unit,
- 214: access point,
- 215: internet network,
- 216: bus,
- 217: communication unit,
- 218: storing unit,
- 219: beacon certification information database,
- 220: server certification unit,
- 221: terminal certification unit,
- 302: beacon signal,
- 601: communication system,
- 603: wireless handy terminal.

## Claims

1. A communication system including a communication device, a communication terminal capable of communicating with the communication device and a server capable of communicating with the communication terminal,
the communication device comprising:
a device storing unit adapted to store terminal certification information to judge legitimacy of the communication terminal;
a device producing unit adapted to produce device request information;
a device communication unit adapted to transmit device request information to the communication terminal; and
a device judging unit adapted to judge legitimacy of the communication terminal by comparing terminal response information transmitted from the communication terminal with device collation information produced by applying the terminal certification information to the device request information,
the communication terminal comprising:
a terminal server communication unit adapted to transmit the device request information transmitted from the communication terminal to the server; and
a terminal device communication unit adapted to transmit the terminal response information transmitted from the server to communication device,
the server comprising:
a server storing unit for storing the terminal certification information; and
a server response unit adapted to produce the terminal response information by applying the terminal certification information to the device request information transmitted from the communication terminal and transmit the terminal response information to the communication terminal.

2. The communication system according to claim 1, further comprising:
a device cryptographic communication unit provided in the communication device for producing a cryptographic key used in cryptographic communication with the communication terminal and conducting cryptographic communication with the communication terminal by using the cryptographic key when the communication terminal is judged to be legitimate.

3. The communication system according to claim 1,
wherein the device communication unit adds, to data packet used for transmitting the device demand information, control information which instruct the communication terminal to relay the data packet itself to the server, and
the server response unit adds, to data packet used for transmitting the terminal response information, control information which instruct the communication terminal to relay the data packet itself to the communication device.

4. The communication system according to claim 1,
in the communication device,
wherein the device storing unit is adapted to store device certification information to judge legitimacy of the communication device, and
the communication device includes a device response unit adapted to produce device response information by applying the device certification information to terminal request information transmitted from the communication terminal and transmit the device response information to the communication terminal,
in the communication terminal,
wherein the terminal device communication unit is adapted to transmit the terminal request information transmitted from the server to the communication device, and
the terminal server communication unit is adapted to transmit the device response information transmitted from the communication device to the server,
in the server,
wherein the server storing unit is adapted to store the device certification information,
the server further comprises:
a server producing unit adapted to produce the terminal request information;
a server communication unit adapted to transmit the terminal request information to the communication terminal;
a server collation information producing unit adapted to produce terminal collation information to certify the communication device by applying the device certification information to the terminal request information produced by the server producing unit; and
a server judgment unit adapted to certify the communication device by comparing the device response information transmitted from the communication device with the terminal collation information.

5. The communication system according to claim 4,
wherein the device response unit adds, to data packet used for transmitting the device response information, control information which instruct the communication terminal to relay the data packet itself to the server, and
the server communication unit adds, to data packet used for transmitting the terminal request information, control information which instruct the communication device to relay the data packet itself to the communication terminal.

6. The communication system according to claim 4,
in the server,
wherein the server storing unit is adapted to store the terminal request information produced by the server producing unit, and
the server response unit does not produce the terminal response information when the device request information transmitted from the communication terminal coincide with the terminal request information stored in the server storing unit.

7. The communication system according to claim 4,
wherein the communication terminal further comprises a terminal cryptographic communication unit that produces a cryptographic key used in communication with the communication device and conducts cryptographic communication with the communication device by using the cryptographic key when the communication terminal is judged to be legitimate.

8. The communication system according to claim 1,
in the communication device,
wherein the device storing unit is adapted to store device certification information to judge legitimacy of the communication device,
the communication device further comprises a device response unit adapted to produce device response information by applying the device certification information to the terminal request information transmitted from the communication terminal and transmit the device response information to the communication terminal,
the communication terminal further comprises:
a terminal producing unit adapted to produce the terminal request information; and
a terminal judgment unit adapted to judge legitimacy of the communication device by comparing the device response information transmitted from the communication device with the terminal collation information transmitted from the server,
in the communication terminal,
wherein the terminal device communication unit is adapted to transmit the terminal request information to the communication device, and
the terminal server communication unit is adapted to transmit the terminal request information to the server,
in the server,
wherein the server storing unit is adapted to store the device certification information, and
the server further comprises:
a server collation information producing unit adapted to produce the terminal collation information to certify the communication device by applying device certification information to the terminal request information transmitted from the communication terminal; and
a server communication unit adapted to transmit the terminal collation information to the communication terminal.

9. The communication system according to claim 8,
wherein the communication terminal further comprises a terminal cryptographic communication unit that produces a cryptographic key used in communication with the communication device and conducts cryptographic communication with the communication device by using the cryptographic key when the communication terminal is judged to be legitimate.

10. A communication system including a communication device, a communication terminal capable of communicating with the communication device and a server capable of communicating with the communication terminal,
the communication device comprising:
a device storing unit adapted to store device certification information to judge legitimacy of the communication device; and
a device response unit adapted to produce device response information by applying the device certification information to terminal request information transmitted from the communication terminal and transmit the device response information to communication terminal,
the communication terminal comprising:
a terminal device communication unit adapted to transmit the terminal request information transmitted from the server to the communication device; and
a terminal server communication unit adapted to transmit the device response information transmitted from the communication device to the server,
the server comprising:
a server producing unit adapted to produce the terminal request information;
a server communication unit adapted to transmit the terminal request information to the communication terminal;
a server storing unit adapted to store the device certification information;
a server collation information producing unit adapted to produce the terminal collation information to certify the communication device by applying the device certification information to the terminal request information produced by the server producing unit; and
a server judgment unit adapted to certify the communication device by comparing the device response information transmitted from the communication device with the terminal collation information.

11. A communication system including a communication device, a communication terminal capable of communicating with the communication device and a server capable of transmitting with the communication terminal,
the communication device comprising:
a device storing unit adapted to store device certification information to judge legitimacy of the communication device; and
a device response unit adapted to produce device response information by applying the device certification information to terminal request information transmitted from the communication terminal and transmit the device response information to communication terminal,
the communication terminal comprising:
a terminal producing unit adapted to produce the terminal request information;
a terminal device communication unit adapted to transmit the terminal request information to the communication device;
a server communication unit adapted to transmit the terminal request information to the server; and
a terminal judgment unit adapted to judge legitimacy of the communication device by comparing the device response information transmitted from the communication device with the terminal collation information transmitted from the server,
the server comprising:
a server storing unit adapted to store the device certification information;
a server collation information producing unit adapted to produce the terminal collation information to certify the communication device by applying the device certification information to the terminal request information transmitted from the communication terminal; and
a server communication unit adapted to transmit the terminal collation information to the communication terminal.
